(19) **Europäisches Patentamt / European Patent Office / Office européen des brevets**

(11) **EP 4 750 199 A1**

(12) **EUROPEAN PATENT APPLICATION**
published in accordance with Art. 153(4) EPC

(43) Date of publication:
**27.05.2026 Bulletin 2026/22**

(21) Application number: **23946107.2**

(22) Date of filing: **21.07.2023**

(51) International Patent Classification (IPC):
***H04W 72/23*** (2023.01)

(52) Cooperative Patent Classification (CPC):
**H04W 72/23**

(86) International application number:
**PCT/CN2023/108756**

(87) International publication number:
**WO 2025/020013 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **ZHAO, Qun**
**Beijing 100085 (CN)**

(74) Representative: **Dehns Germany Partnerschaft mbB**
**Theresienstraße 6-8**
**80333 München (DE)**

(54) **SIGNAL TRANSMISSION METHOD, DEVICE, AND STORAGE MEDIUM**

(57)    The present disclosure relates to a signal transmission method, a device, and a storage medium. The method comprises: a receiving end determines a first wireless resource occupied by a sensing signal, wherein the sensing signal is a signal sent by a transmitting end and used for sensing; and receiving a communication signal by means of a second wireless resource, wherein the second wireless resource does not comprise the first wireless resource. In this way, in an integrated sensing and communication (ISAC) scenario, the impact of a sensing signal on transmission of a communication signal can be avoided, improving the transmission reliability of the communication signal in the ISAC scenario.

## FIG. 3B

S4101, determine a first parameter

↓

4102, determine a first wireless resource occupied by a sensing signal

↓

S4103, send the first parameter

↓

S4104, Send a communication signal via a second wireless resource

## Description

### TECHNICAL FIELD

The present disclosure relates to the technical field of communication, and in particular, to a signal transmission method, device and storage medium.

### BACKGROUND

Wireless communication technology and wireless sensing technology are highly similar. Integrated Sensing And Communication (ISAC) can combine wireless communication and wireless sensing and introduce close cooperation therebetween, thereby improving spectrum efficiency and reducing network deployment costs.

### SUMMARY

The embodiments of the present disclosure provide a signal transmission method, device and storage medium.

According to a first aspect of the embodiments of the present disclosure, a signal transmission method is proposed, the method including:

determining, by a receiving end, a first wireless resource occupied by a sensing signal, where the sensing signal is a signal sent by a transmitting end for sensing; and
receiving a communication signal via a second wireless resource, where the second wireless resource does not include the first wireless resource.

According to a second aspect of the embodiments of the present disclosure, a signal transmission method is proposed, the method including:

determining, by a transmitting end, a first wireless resource occupied by a sensing signal, where the sensing signal is a signal sent by the transmitting end for sensing; and
sending a communication signal via a second wireless resource, where the second wireless resource does not include the first wireless resource.

According to a third aspect of the embodiments of the present disclosure, a signal transmission method is proposed, the method including:

a transmitting end determining a first wireless resource occupied by a sensing signal, and sending a communication signal via a second wireless resource; where the sensing signal is a signal sent by the transmitting end for sensing, and the second wireless resource does not include the first wireless resource; and
a receiving end determining the first wireless resource occupied by the sensing signal, and receiving the communication signal via the second wireless resource.

According to a fourth aspect of the embodiments of the present disclosure, a receiving end is provided, including:

a processing module, configured to determine a first wireless resource occupied by a sensing signal, where the sensing signal is a signal sent by a transmitting end for sensing; and
a transceiver module, configured to receive a communication signal via a second wireless resource, where the second wireless resource does not include the first wireless resource.

According to a fifth aspect of the embodiments of the present disclosure, a transmitting end is provided, including:

a processing module, configured to determine a first wireless resource occupied by a sensing signal, where the sensing signal is a signal sent by a transmitting end for sensing; and
a transceiver module, configured to send a communication signal via a second wireless resource, where the second wireless resource does not include the first wireless resource.

According to a sixth aspect of the embodiments of the present disclosure, a receiving end is proposed, including: one or more processors; where the receiving end may be configured to execute the optional implementations of the first aspect.

According to a seventh aspect of the embodiments of the present disclosure, a transmitting end is proposed, including: one or more processors; where the transmitting end may be configured to execute the optional implementations of the second aspect.

According to an eighth aspect of the embodiments of the present disclosure, a communication system is proposed, which may include: a receiving end and a transmitting end; where the receiving end is configured to execute the method described in the optional implementations of the first aspect, and the transmitting end is configured to execute the method described in the optional implementations of the second aspect.

According to a ninth aspect of the embodiments of the present disclosure, a storage medium is proposed, which stores instructions. When the instructions are executed on a communication device, the communication device executes the method described in the optional implementations of the first aspect or the second aspect.

The technical solutions provided by the embodiments of the present disclosure may include the following beneficial effects: the receiving end determines the first wireless resource occupied by the sensing signal, which is a signal sent by the transmitting end for sensing; and receives the communication signal via the second wireless resource, which does not include the first wireless resource. In this way, in the Integrated Sensing And Communication (ISAC) scenario, it is possible to avoid the sensing signal affecting the transmission of the communication signal, thereby improving the transmission reliability of the communication signal in the Integrated Sensing And Communication scenario.

It is to be understood that the foregoing general description and the following detailed description are exemplary and explanatory only and are not restrictive of the present disclosure.

## BRIEF DESCRIPTION OF THE DRAWINGS

In order to more clearly illustrate the technical solutions in the embodiments of the present disclosure, the drawings required for describing the embodiments are introduced below. The following drawings are only some embodiments of the present disclosure and do not impose specific limitations on the protection scope of the present disclosure.

FIG. 1 is a schematic diagram of an architecture of a communication system according to an embodiment of the present disclosure.

FIG. 2A is a schematic flowchart of a signal transmission method according to an embodiment of the present disclosure.

FIG. 2B is a schematic diagram showing resource occupancy of a sensing signal according to an embodiment of the present disclosure.

FIG. 3A is a schematic flowchart of a signal transmission method according to an embodiment of the present disclosure.

FIG. 3B is a schematic flowchart of a signal transmission method according to an embodiment of the present disclosure.

FIG. 4A is a schematic flowchart of a signal transmission method according to an embodiment of the present disclosure.

FIG. 4B is a schematic flowchart of a signal transmission method according to an embodiment of the present disclosure.

FIG. 5 is a schematic flowchart of a signal transmission method according to an embodiment of the present disclosure.

FIG. 6 is a schematic flowchart of a signal transmission method according to an embodiment of the present disclosure.

FIG. 7A is a schematic diagram of a structure of a receiving end according to an embodiment of the present disclosure.

FIG. 7B is a schematic diagram of a structure of a transmitting end according to an embodiment of the present disclosure.

FIG. 8A is a schematic diagram of a structure of a communication device according to an embodiment of the present disclosure.

FIG. 8B is a schematic diagram of a structure of a chip according to an embodiment of the present disclosure.

## DETAILED DESCRIPTION

The embodiments of the present disclosure provide a signal transmission method, device and storage medium.

In a first aspect, an embodiment of the present disclosure provides a signal transmission method, the method including:

a receiving end determining a first wireless resource occupied by a sensing signal, where the sensing signal is a signal sent by the transmitting end for sensing; and

receiving a communication signal via a second wireless resource, where the second wireless resource does not include the first wireless resource.

In the above embodiment, the second wireless resource used to transmit the communication signal does not include the first wireless resource occupied by the sensing signal, so that mutual interference between the sensing signal and the communication signal can be avoided, thereby improving the transmission reliability of the sensing signal and the communication signal in the Integrated Sensing And Communication scenario.

In combination with some embodiments of the first aspect, in some embodiments, the method further includes:

acquiring a first parameter;
the receiving end determining the first wireless resource occupied by the sensing signal includes:
the receiving end determining the first wireless resource occupied by the sensing signal according to the first parameter.

In the above embodiment, the first wireless resource can be determined according to the first parameter, so that the first wireless resource occupied by the sensing signal can be flexibly determined, thereby improving the flexibility of signal transmission in the Integrated Sensing And Communication scenario.

In combination with some embodiments of the first aspect, in some embodiments, acquiring the first parameter includes:

receiving a first message sent by the transmitting end, where the first message includes the first parameter.

In the above embodiment, the first parameter can be acquired through the first message, so that the transmitting end and the receiving end use the same first parameter, thereby improving the reliability and flexibility of signal transmission.

In combination with some embodiments of the first aspect, in some embodiments,

the transmitting end is a network device, the receiving end is a terminal device, and the first message is a radio resource control (RRC) message; or
the transmitting end and the receiving end are both terminal devices, and the first message is a sidelink RRC message.

In the above embodiment, the first parameter can be acquired through the first message in different scenarios, thereby increasing the application scenarios of the technical solution.

In combination with some embodiments of the first aspect, in some embodiments, acquiring the first parameter includes:

receiving a second message sent by the transmitting end, where the second message includes one or more second parameters;
receiving indication information sent by the transmitting end, where the indication information is used to instruct the receiving end to determine the first parameter from the one or more second parameters;
determining the first parameter from the one or more second parameters according to the indication information.

In the above embodiment, the first parameter can be determined more flexibly through the second message and the indication information.

In combination with some embodiments of the first aspect, in some embodiments,

the transmitting end is a network device, the receiving end is a terminal device, and the second message is an RRC message; or
the transmitting end and the receiving end are both terminal devices, and the second message is a sidelink RRC message.

In the above embodiment, the first parameter can be acquired through the second message and the indication information in different scenarios, thereby increasing the application scenarios of the technical solution.

In combination with some embodiments of the first aspect, in some embodiments, the first parameter includes:

a first frequency domain interval P;
a second frequency domain interval Q, where P and Q are a pair of coprime positive integers, and P is smaller than Q;
a minimum frequency domain interval $K_{min}$, where $K_{min}$ is a positive integer.

In the above embodiment, a pair of coprime positive integers and a minimum frequency domain interval may be used to provide a frequency domain pattern of a sensing signal with non-uniform distribution in the frequency domain, thereby improving the reliability of sensing signal transmission.

In combination with some embodiments of the first aspect, in some embodiments, the first parameter further includes at least one of the following:

a subcarrier offset k, where k is a non-negative integer less than or equal to $K_{min}$;
a starting physical resource block (PRB) number $K_0$, where $K_0$ is a non-negative integer, $K_0$ is an offset of a starting PRB of the first wireless resource relative to an N-th common resource block (CRB), and N is a preset non-negative integer;
a time domain symbol number set L,
a time domain period $T_{slot}$, where $T_{slot}$ is a positive integer;
a slot offset $S_{offset}$, where $S_{offset}$ is a non-negative integer less than $T_{slot}$;
a starting slot number $S_0$, where $S_0$ is a non-negative integer; and
a slot number $S_{num}$, where $S_{num}$ is a positive integer.

In the above embodiment, the sensing signal pattern with non-uniform distribution in the frequency domain can be further flexibly determined by at least one of the above parameters, thereby improving the flexibility and reliability of the sensing signal transmission.

In a second aspect, an embodiment of the present disclosure provides a signal transmission method, the method including:

a transmitting end determining a first wireless resource occupied by a sensing signal, where the sensing signal is a signal sent by the transmitting end for sensing; and
sending a communication signal via a second wireless resource, where the second wireless resource does not include the first wireless resource.

In the above embodiment, the second wireless resource used to transmit the communication signal does not include the first wireless resource occupied by the sensing signal, so that mutual interference between the sensing signal and the communication signal can be avoided, thereby improving the transmission reliability of the sensing signal and the communication signal in the Integrated Sensing And Communication scenario.

In combination with some embodiments of the second aspect, in some embodiments, the transmitting end determining the first wireless resource occupied by the sensing signal includes:
the transmitting end determining the first wireless resource occupied by the sensing signal according to a first parameter.

In combination with some embodiments of the second aspect, in some embodiments, the method further includes:
sending a first message to a receiving end, where the first message includes the first parameter.

In combination with some embodiments of the second aspect, in some embodiments,

the transmitting end is a network device, the receiving end is a terminal device, and the first message is a radio resource control (RRC) message; or
the transmitting end and the receiving end are both terminal devices, and the first message is a sidelink RRC message.

In combination with some embodiments of the second aspect, in some embodiments, the method further includes:

sending a second message to the receiving end, where the second message includes one or more second parameters;
sending indication information to the receiving end, where the indication information is used to instruct the receiving end to determine the first parameter from the one or more second parameters.

In combination with some embodiments of the second aspect, in some embodiments,

the transmitting end is a network device, the receiving end is a terminal device, and the second message is an RRC message; or
the transmitting end and the receiving end are both terminal devices, and the second message is a sidelink RRC message.

In combination with some embodiments of the second aspect, in some embodiments, the first parameter includes:

a first frequency domain interval P;
a second frequency domain interval Q, where P and Q are a pair of coprime positive integers, and P is smaller than Q; and
a minimum frequency domain interval $K_{min}$, where $K_{min}$ is a positive integer.

In combination with some embodiments of the second aspect, in some embodiments, the first parameter further includes at least one of the following:

a subcarrier offset k, where k is a non-negative integer less than or equal to $K_{min}$;
a starting physical resource block (PRB) number $K_0$, where $K_0$ is a non-negative integer, $K_0$ is an offset of a starting PRB of the first wireless resource relative to an N-th common resource block (CRB), and N is a preset non-negative integer;
a time domain symbol number set L,
a time domain period $T_{slot}$, where $T_{slot}$ is a positive integer;
a slot offset $S_{offset}$, where $S_{offset}$ is a non-negative integer less than $T_{slot}$;
a starting slot number $S_0$, where $S_0$ is a non-negative integer;
a slot number $S_{num}$, where $S_{num}$ is a positive integer.

In a third aspect, an embodiment of the present disclosure provides a signal transmission method, the method including:

a transmitting end determining a first wireless resource occupied by a sensing signal, and sending a communication signal via a second wireless resource; where the sensing signal is a signal sent by the transmitting end for sensing, and the second wireless resource does not include the first wireless resource;
a receiving end determining the first wireless resource occupied by the sensing signal, and receiving the communication signal via the second wireless resource.

In the above embodiment, the second wireless resource used to transmit the communication signal does not include the first wireless resource occupied by the sensing signal, so that mutual interference between the sensing signal and the communication signal can be avoided, thereby improving the transmission reliability of the sensing signal and the communication signal in the Integrated Sensing And Communication scenario.

In a fourth aspect, an embodiment of the present disclosure proposes a receiving end, which may include at least one of a transceiver module and a processing module; where the receiving end may be configured to execute the optional implementations of the first aspect.

In a fifth aspect, an embodiment of the present disclosure proposes a transmitting end, which may include at least one of a transceiver module and a processing module; where the transmitting end may be configured to execute the optional implementations of the second aspect.

In a sixth aspect, an embodiment of the present disclosure proposes a receiving end, which may include: one or more processors; where the receiving end may be configured to execute the optional implementations of the first aspect.

In a seventh aspect, an embodiment of the present disclosure proposes a transmitting end, which may include: one or more processors; where the transmitting end may be configured to execute the optional implementations of the second aspect.

In an eighth aspect, an embodiment of the present disclosure proposes a communication system, which may include: a receiving end and a transmitting end; where the receiving end is configured to execute the method described in the optional implementations of the first aspect, and the transmitting end is configured to execute the method described in the optional implementations of the second aspect.

In a ninth aspect, an embodiment of the present disclosure proposes a storage medium storing instructions, which, when executed on a communication device, enables the communication device to execute the method described in the optional implementations of the first aspect or the second aspect.

In a tenth aspect, an embodiment of the present disclosure proposes a program product, which, when executed by a communication device, enables the communication device to execute the method described in the optional implementations of the first aspect or the second aspect.

In an eleventh aspect, an embodiment of the present disclosure proposes a computer program, which, when executed on a computer, enables the computer to execute the method described in the optional implementations of the first aspect or the second aspect.

In a twelfth aspect, an embodiment of the present disclosure provides a chip or a chip system, where the chip or the chip system includes a processing circuit configured to execute the method described in the optional implementations of the first aspect or the second aspect.

It is understandable that the above-mentioned receiving end, transmitting end, communication device, communication system, storage medium, program product, computer program, chip or chip system can be used to execute the method proposed in the embodiments of the present disclosure. Therefore, the beneficial effects that can be achieved can refer to the beneficial effects in the corresponding method, which will not be repeated here.

The embodiments of the present disclosure provide a signal transmission method, device and storage medium. In some embodiments, the terms, such as signal transmission method, information processing method, communication method, etc. can be replaced with each other; the terms, such as signal transmission apparatus, information processing apparatus, communication apparatus, communication device, etc. can be replaced with each other; the terms, such as information processing system, communication system, etc. can be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined, for example, some or all of the steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English in translation, the noun after the article may be understood as a singular expression or a plural expression.

In some embodiments, "a plurality of/multiple" may refer to two or more than two.

In some embodiments, terms such as "a plurality of", "multiple", "at least one of", "one or more" may be used interchangeably.

In some embodiments, "at least one of A and B", "A and/or B", "A in one case, B in another case", "in response to one case, A, in response to another case, B", etc., may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, etc., the above is also similar.

In some embodiments, the recording manner of "A or B" may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, etc., the above is also similar.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number, and can be one or more. Taking the "first apparatus" as an example, the number of "apparatuses" can be one or more. In addition, the objects modified by different prefixes may be the same or different. For example, if the description object is "apparatus", then the "first apparatus" and the "second apparatus" may be the same apparatus or different apparatuses, and their types may be the same or different. For another example, if the description object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, terms such as "in response to...", "in response to determining...", "in the case of...", "at the time of...", "when...", "in case...", "if...", etc. can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatuses and devices may be interpreted as physical or virtual, and their names are not limited to the names recorded in the embodiments. In some cases, they may also be understood as "equipment", "device", "circuit", "network element", "node", "function", "unit", "section", "system", "network", "chip", "chip system", "entity", "subject", etc.

In some embodiments, "network" can be interpreted as apparatus included in the network, such as an access network device, a core network device, etc.

In some embodiments, "Access Network Device (AN Device)" may also be referred to as "Radio Access Network Device (RAN Device)", "Base Station (BS)", "Radio Base Station", "Fixed Station", and in some embodiments may also be understood as "Node", "Access Point", "Transmission Point (TP)", "Reception Point (RP)", "Transmission and/or Reception Point (TRP)", "Panel", "Antenna Panel", "Antenna Array", "Cell", "Macro Cell", "Small Cell", "Femto Cell", "Pico Cell", "Sector", "Cell Group", "Serving Cell", "Carrier", "Component Carrier", "Bandwidth Part (BWP)", etc.

In some embodiments, "terminal" or "terminal device" can be called "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handheld device (Handset), user agent, mobile client, client, etc.

In some embodiments, acquisition of data, information, etc. may comply with the laws and regulations of the country where the data is acquired.

In some embodiments, data, information, etc. may be obtained with the user's consent.

In addition, each element, each row, or each column in the table of the embodiments of the present disclosure may be implemented as an independent embodiment, and the combination of any elements, any rows, and any columns may also be implemented as an independent embodiment.

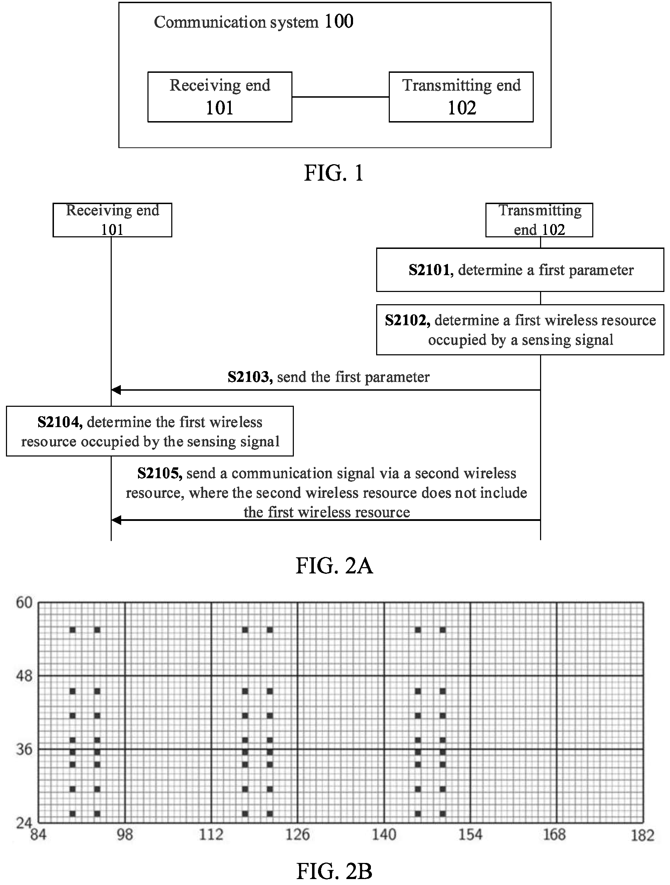

FIG. 1 is a schematic diagram of an architecture of a communication system according to some embodiments. As shown in FIG. 1, the communication system 100 may include a transmitting end 102 and a receiving end 101, where the transmitting end 102 is used to send a sensing signal and/or a communication signal, and the receiving end 101 is used to receive a communication signal, and the receiving end 101 may also be used to receive a sensing signal.

It should be noted that the number of transmitting ends 102 and the number of receiving ends 101 shown in FIG. 1 are only examples and do not constitute a limitation on the embodiments of the present disclosure. In actual situations, the transmitting end 102 can be one or more, and the receiving end 101 can also be one or more.

In some embodiments, the transmitting end 102 may be a network device, and the receiving end 101 may be a terminal device.

In some embodiments, the transmitting end 102 may be a terminal device, and the receiving end 101 may be a network device.

In some embodiments, the transmitting end 102 and the receiving end 101 may both be terminal devices.

In some embodiments, the transmitting end 102 and the receiving end 101 may both be network devices, such as access network devices.

In some embodiments, the above-mentioned terminal device may include at least one of a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in a smart city, and a wireless terminal device in a smart home, but is not limited thereto.

In some embodiments, the above-mentioned network device may include at least one of an access network device and a core network device.

In some embodiments, the access network device may be a node or device that accesses a terminal to a wireless network. The access network device may include at least one of an evolved Node B (eNB), a next generation evolved Node B (next generation eNB, ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wi-Fi system, but is not limited thereto.

In some embodiments, the technical solutions of the present disclosure may be applicable to the Open RAN architecture. In this case, the interfaces between access network devices or within access network devices involved in the embodiments of the present disclosure may become internal interfaces of Open RAN, and the processes and information interactions between these internal interfaces may be implemented through software or programs.

In some embodiments, the access network device may be composed of a Central Unit (CU) and a distributed unit (DU), where the CU may also be called a control unit. The CU-DU structure may be used to split the protocol layer of the access network device, with some functions of the protocol layer being centrally controlled by the CU, and the remaining part or all of the functions of the protocol layer being distributed in the DU, and the DU being centrally controlled by the CU, but not limited thereto.

In some embodiments, the core network device may be one device, or may be multiple devices or a group of devices. The core network may include at least one of an Evolved Packet Core (EPC), a 5G Core Network (5GCN), and a Next Generation Core (NGC).

It can be understood that the communication system described in the embodiments of the present disclosure is for the purpose of more clearly illustrating the technical solutions of the embodiments of the present disclosure, and does not constitute a limitation on the technical solutions proposed in the embodiments of the present disclosure. A person of ordinary skill in the art can know that with the evolution of the system architecture and the emergence of new service scenarios, the technical solutions proposed in the embodiments of the present disclosure are also applicable to similar technical problems.

The following embodiments of the present disclosure may be applied to the communication system 100 shown in FIG. 1, or part of the subject, but are not limited thereto. The subjects shown in FIG. 1 are examples, and the communication system may include all or part of the subjects in FIG. 1, or may include other subjects other than FIG. 1, and the number and form of the subjects are arbitrary, and the subjects may be physical or virtual, and the connection relationship between the subjects is an example, and the subjects may be connected or disconnected, and the connection may be in any manner, and may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G new radio (NR), Future Radio Access (FRA), New-Radio Access Technology (RAT), New Radio (NR), New Radio Access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device to Device (D2D) system, Machine to Machine (M2M) system, Internet of Things (IoT) system, Vehicle-to-Everything (V2X), systems using other communication methods, and next-generation systems expanded based on them. In addition, a combination of multiple systems (for example, a combination of LTE or LTE-A with 5G, etc.) may also be applied.

In some embodiments of the present disclosure, the above communication system may be an Integrated Sensing And Communication system, and the wireless communication technology and the wireless sensing technology are highly similar. Since Integrated Sensing And Communication can combine wireless communication and wireless sensing and introduce close cooperation therebetween, spectrum efficiency is improved and network deployment costs is reduced.

In some embodiments, wireless sensing requires estimating the distance, azimuth angle (such as horizontal angle and vertical angle), and speed of the sensing target. Optionally, sensing also includes wireless tracking and radio frequency identification of the sensing target.

In some embodiments, in order to perform high-precision sensing, the transmitting end may send a special sensing signal (e.g., a reference signal). The reference signal may be referred to as a sensing reference signal. For the bistatic mode, the receiver measures the sensing signal to estimate the distance, angle, and/or speed of the sensing target. For the monostatic mode, the receiving end measures the echo of the sensing signal to estimate the distance, angle, and/or speed of the sensing target.

In the monostatic mode, the transmitting end and the receiving end are co-located, for example, the transmitting end and the receiving end are deployed on the same device. In the bistatic mode, the receiving end and the transmitting end are not co-located, for example, the transmitting end and the receiving end are deployed on different devices, or deployed at different locations on the same device.

In some embodiments, the sensing signal can be multiplexed with the communication signal, for example, the sensing signal of wireless sensing and the communication signal (including data payload and reference signal in wireless communication, etc.) share the time-frequency two-dimensional resource grid. Relatively speaking, compared with the wireless communication link oriented to maximize throughput, the wireless sensing link is more sensitive to interference. That is, once the sensing signal is interfered, the accuracy and performance of its wireless sensing may be significantly reduced.

Therefore, how to achieve the coordination of the communication signal and the sensing signal has become an urgent problem to be solved.

FIG. 2A is a flowchart of a signal transmission method according to an embodiment of the present disclosure. The method may be performed by the above communication system. As shown in FIG. 2A, the method may include the following steps.

In step S2101: the transmitting end determines a first parameter.

In some embodiments, the transmitting end may be used to send a signal, for example, may be used to send a communication signal and/or a sensing signal. Similarly, the receiving end may be used to receive a signal, for example, may be used to receive a communication signal and/or a sensing signal.

The communication signal may include a signal used to perform wireless communication (e.g., voice or data), such as a signal carrying a reference signal, control signaling, service data, etc. The communication signal may also be referred to as a wireless communication signal.

The sensing signal may be a signal for performing wireless sensing, for example, a signal for sensing sent by the transmitting end. The sensing signal may include a sensing reference message, the sensing reference signal may be a reference signal specifically used for sensing, or the sensing signal may include other signals for performing wireless sensing.

In the Integrated Sensing And Communication scenario involved in the embodiments of the present disclosure, the transmitting end that sends the communication signal and the transmitting end that sends the sensing signal can be the same transmitting end or different transmitting ends. Similarly, the receiving end that receives the communication signal and the receiving end that receives the sensing signal can be the same receiving end or different receiving ends. The transmitting end and the receiving end can be set on the same device or on different devices.

In some embodiments, the name of the transmitting end is not limited, for example, it can be a "transmitter", "wireless transmitter", "wireless communication transmitter", "wireless sensing transmitter", "Integrated Sensing And Communication transmitter", etc. The name of the receiving end is not limited, for example, it can be a "receiver", "wireless receiver", "wireless communication receiver", "wireless sensing receiver", "Integrated Sensing And Communication receiver", etc.

In some embodiments, the first parameter may be used to determine a first wireless resource occupied by the sensing signal, and the first wireless resource may include at least one resource element (RE), at least one resource element group (REG), at least one resource block (RB), or at least one resource block group (RBG). It should be noted that the resource element (RE) may also be referred to as a resource unit or a resource element.

In some embodiments, the first parameter may be used to determine a second wireless resource not occupied by the sensing signal. Similarly, the second wireless resource may include at least one RE, at least one REG, at least one RB, or at least one RBG.

In some embodiments, the name of the first parameter is not limited, and may be, for example, "rate match pattern", "rate match mode", "rate match parameter", "RateMatchPattern", "rate match pattern based on coprime integers", "RateMatchPattern-Coprime", "sensing reference signal pattern", "sensing signal resource determination parameter", etc.

In some embodiments, the first parameter may define a new pattern type (patternType) in the RateMatchPattern of the 3GPP protocol, or may define a new RRC information element in the 3GPP protocol, for example, a rate match pattern based on coprime integers (RateMatchPattern-Coprime).

In some embodiments, the transmitting end may receive the first parameter sent by other entities.

In some embodiments, the transmitting end may obtain the above-mentioned first parameter specified by the protocol.

In some embodiments, the transmitting end can obtain the above-mentioned first parameter from the upper layer(s).

In some embodiments, the transmitting end may perform processing to obtain the first parameter. For example, the transmitting end may pre-configure the first parameter.

In some embodiments, step S2101 can be omitted, and the transmitting end can autonomously implement the function indicated by the first parameter, or the first parameter is default or acquiescent.

In step S2102: the transmitting end determines a first wireless resource occupied by a sensing signal.

In some embodiments, the first wireless resource occupied by the sensing signal may also be referred to as the first wireless resource used to carry the sensing signal. For example, the transmitting end may determine the first wireless resource used to carry the sensing signal.

In some embodiments, the transmitting end may determine the first wireless resource occupied by the sensing signal according to the above-mentioned first parameter.

For example, the transmitting end may respectively determine the frequency domain position and the time domain position occupied by the sensing signal, and determine the first wireless resource according to the frequency domain position and the time domain position. For example, the first wireless resource can be determined according to the intersection of the frequency domain position and the time domain position.

For example, the transmitting end may determine a first position set and a second position set according to the first parameter, and determine the frequency domain position occupied by the sensing signal according to the first position set and the second position set.

For example, the first wireless resource is a resource element (RE), the first position set and the second position set can be used to indicate the subcarrier position, and it is possible to take a union of the subcarrier positions in the first position set and the second position set to obtain a subcarrier position set, and the RE corresponding to the subcarrier position set is used as the frequency domain position occupied by the sensing signal.

In some embodiments, the subcarrier positions indicated by the first position set are uniformly distributed, the subcarrier positions indicated by the second position set are uniformly distributed, and the subcarrier positions indicated by the subcarrier position set are non-uniformly distributed.

According to the above technical solution, the transmitting end can first determine two position sets in which the subcarrier positions are uniformly distributed according to the first parameter, and then obtain a subcarrier position set in which the subcarrier positions are non-uniformly distributed according to the two position sets. The transmitting end sends a sensing signal according to the non-uniformly distributed subcarrier positions.

In some embodiments, the frequency domain positions of the subcarriers in the first position set and the frequency domain positions of the subcarriers in the second position set can be determined according to a pair of coprime positive integers.

According to the above technical solution, the transmitting end can determine two position sets in which the subcarrier positions are uniformly distributed according to the parameter used to determine the subcarrier positions, and the subcarrier frequency domain interval in the two position sets is determined according to a pair of coprime positive integers. Therefore, except for the subcarrier position at position 0 in the two position sets, the remaining subcarrier positions do not overlap. Then, a subcarrier position set in which the subcarrier positions are non-uniformly distributed is obtained according to the two position sets, and the transmitting end determines the frequency domain position occupied by the sensing signal according to the non-uniformly distributed subcarrier positions.

The frequency domain pattern of the sensing signal with non-uniform distribution in the frequency domain provided by the subcarrier position set in the embodiment of the present disclosure can achieve a relatively large uniform degree of freedom in the Khatri-Rao subspace and avoid multiple mirror images of the channel impulse response observed at the receiving end.

In some embodiments of the present disclosure, the first parameter may include:

a first frequency domain interval P;
a second frequency domain interval Q, where P and Q are a pair of coprime positive integers, and P is smaller than Q, for example, P=2, Q=5;
a minimum frequency domain spacing $K_{min}$, which is a positive integer. The minimum frequency domain spacing may also be referred to as a minimum subcarrier spacing.

In some embodiments, the minimum frequency domain interval $K_{min}$ may be predefined by a protocol.

In some embodiments, $K_{min} \in \{2, 4, 6, 12\}$.

In some embodiments, the transmitting end may sequentially select integers from 0 to Q-1 for the variable q based on the calculation formula $q*P*K_{min}$ to obtain a first position set, and sequentially select integers from 1 to 2P-1 for the variable p based on the calculation formula $p*Q*K_{min}$ to obtain a second position set.

It can be understood that each number in the first position set and the second position set respectively indicates one subcarrier position in an Orthogonal Frequency Division Multiplexing (OFDM) system.

In this case, the number of subcarrier positions indicated by the first position set is Q, and the subcarrier frequency domain spacing is $P*K_{min}$, and the number of subcarrier positions indicated by the second position set is 2P-1, and the subcarrier frequency domain spacing is $Q*K_{min}$.

The subcarrier position set can be expressed as:

$$\{q*P*K_{min} \,|\, q=0,1,\ldots,Q\text{-}1\} \cup \{p*Q*K_{min} \,|\, p=1,2,\ldots,2P\text{-}1\}$$

For example, assuming $K_{min}$ is 2, P is 5, and Q is 7, then:

the first position set is {0,10,20,30,40,50,60};
the second position set is {14, 28, 42, 56, 70, 84, 98, 112, 126}.

It can be obtained that the subcarrier position set is {0, 10, 14, 20, 28, 30, 40, 42, 50, 56, 60, 70, 84, 98, 112, 126}.

In other embodiments, the transmitting end may sequentially select integers from 1 to Q-1 for the variable q based on the calculation formula $q*P*K_{min}$ to obtain a first position set, and sequentially select integers from 0 to 2P-1 for the variable p based on the calculation formula $p*Q*K_{min}$ to obtain a second position set.

In this case, the number of subcarrier positions indicated by the first position set is Q-1, and the subcarrier frequency domain spacing is $P*K_{min}$, and the number of subcarrier positions indicated by the second position set is 2P, and the subcarrier frequency domain spacing is $Q*K_{min}$.

The subcarrier position set can be expressed as:

$$\{q*P*K_{min} \mid q=1,2,\ldots,Q\text{-}1\} \cup \{p*Q*K_{min} \mid p=0,1,2,\ldots,2P\text{-}1\}$$

For example, assuming $K_{min}$ is 2, P is 5, and Q is 7, then:

the first position set is {10,20,30,40,50,60};
the second position set is {0,14,28,42,56,70,84,98,112.126}.

It can be obtained that the subcarrier position set is {0, 10, 14, 20, 28, 30, 40, 42, 50, 56, 60, 70, 84, 98, 112, 126}.

In other embodiments, the transmitting end may sequentially select integers from 0 to Q-1 for the variable q based on the calculation formula $q*P*K_{min}$ to obtain a first position set, and sequentially select integers from 0 to 2P-1 for the variable p based on the calculation formula $p*Q*K_{min}$ to obtain a second position set.

In this case, the number of subcarrier positions indicated by the first position set is Q, and the subcarrier frequency domain spacing is $P*K_{min}$, and the number of subcarrier positions indicated by the second position set is 2P, and the subcarrier frequency domain spacing is $Q*K_{min}$.

The subcarrier position set can be expressed as:

$$\{q*P*K_{min} \mid q=0,1,2,\ldots,Q\text{-}1\} \cup \{p*Q*K_{min} \mid p=0,1,2,\ldots,2P\text{-}1\}$$

For example, assuming $K_{min}$ is 2, P is 5, and Q is 7, then:

the first position set is {0,10,20,30,40,50,60};
the second position set is {0,14,28,42,56,70,84,98,112,126}.

It can be obtained that the subcarrier position set is {0, 10, 14, 20, 28, 30, 40, 42, 50, 56, 60, 70, 84, 98, 112, 126}.

According to the above technical solutions, the frequency domain pattern of the sensing signal with non-uniform distribution in the frequency domain provided by the subcarrier position set in the embodiment of the present disclosure can reduce the resource overhead and total transmission power of the sensing signal, and can achieve relatively high time domain resolution and high sensing accuracy.

In some other embodiments of the present disclosure, the first parameter may further include at least one of the following:

a frequency domain offset k, where k is a non-negative integer less than or equal to $K_{min}$, the frequency domain offset may also be referred to as a subcarrier offset, the frequency domain offset k is used to indicate the offset of the starting frequency domain (e.g., subcarrier) occupied by the sensing signal relative to the N-th frequency domain (e.g., subcarrier) in one PRB, and N is a non-negative integer, for example, N may be 0;
a starting physical resource block (PRB) number $K_0$, where $K_0$ is a non-negative integer, $K_0$ is the offset of the starting PRB of the first wireless resource relative to the N-th common resource block (CRB), and N is a preset non-negative integer. Optionally, N may be 0, and the N-th common resource block (CRB) may be CRBO. For example, the starting physical resource block (PRB) number is 2, which may indicate that the sensing signal is carried starting from the second PRB relative to CRB0, that is, the PRB starting from the 24th resource element (RE) is used to indicate that the sensing signal is carried.

In some embodiments, the transmitting end may take integers from 0 to Q-1 for the variable q based on the calculation formula $q*P*K_{min}$, +k to obtain a first position set, and take integers from 1 to 2P-1 for the variable p based on the calculation formula $p*Q*K_{min}$ +k to obtain a second position set.

In this case, the number of subcarrier positions indicated by the first position set is Q, and the subcarrier frequency domain spacing is $P*K_{min}$, and the number of subcarrier positions indicated by the second position set is 2P-1, and the subcarrier frequency domain spacing is $Q*K_{min}$.

The subcarrier position set can be expressed as:

$$\{q*P*K_{min} +k \mid q=0,1,\ldots,Q\text{-}1\} \cup \{p*Q*K_{min} +k \mid p=1,2,\ldots,2P\text{-}1\}$$

In other embodiments, the transmitting end may take integers from 1 to Q-1 for the variable q based on the calculation formula $q*P*K_{min}+k$ to obtain a first position set, and may take integers from 0 to 2P-1 for the variable p based on the calculation formula $p*Q*K_{min}+k$ to obtain a second position set.

In this case, the number of subcarrier positions indicated by the first position set is Q-1, and the subcarrier frequency domain spacing is $P*K_{min}$, and the number of subcarrier positions indicated by the second position set is 2P, and the subcarrier frequency domain spacing is $Q*K_{min}$.

The subcarrier position set can be expressed as:

$$\{q*P*K_{min}+k|q=1,2,…,Q\text{-}1\}\cup\{p*Q*K_{min}+k|p=0,1,2,…,2P\text{-}1\}$$

In other embodiments, the transmitting end may take integers from 0 to Q-1 for the variable q based on the calculation formula $q*P*K_{min}+k$ to obtain a first position set, and may take integers from 0 to 2P-1 for the variable p based on the calculation formula $p*Q*K_{min}+k$ to obtain a second position set.

In this case, the number of subcarrier positions indicated by the first position set is Q, and the subcarrier frequency domain spacing is $P*K_{min}$, and the number of subcarrier positions indicated by the second position set is 2P, and the subcarrier frequency domain spacing is $Q*K_{min}$.

The subcarrier position set can be expressed as:

$$\{q*P*K_{min}+k|q=0,1,2,…,Q\text{-}1\}\cup\{p*Q*K_{min}+k|p=0,1,2,…,2P\text{-}1\}$$

It can be understood that the subcarrier conflicts of different sensing links or communication networks can be avoided by flexibly setting the value of k.

In some embodiments, the transmitting end may take integers from 0 to Q-1 for the variable q based on the calculation formula $q*P*K_{min}+k+K_0$ to obtain a first position set, and take integers from 1 to 2P-1 for the variable p based on the calculation formula $p*Q*K_{min}+k$ to obtain a second position set.

In this case, the number of subcarrier positions indicated by the first position set is Q, and the subcarrier frequency domain spacing is $P*K_{min}$, and the number of subcarrier positions indicated by the second position set is 2P-1, and the subcarrier frequency domain spacing is $Q*K_{min}$.

The subcarrier position set can be expressed as:

$$\{q*P*K_{min}+k+K_0|q=0,1,…,Q\text{-}1\}\cup\{p*Q*K_{min}+k+K_0|p=1,2,…,2P\text{-}1\}$$

In other embodiments, the transmitting end may obtain a first position set by successively taking integers from 1 to Q-1 for the variable q based on the calculation formula $q*P*K_{min}+k+K_0$, and obtain a second position set by successively taking integers from 0 to 2P-1 for the variable p based on the calculation formula $p*Q*K_{min}+k+K_0$.

In this case, the number of subcarrier positions indicated by the first position set is Q-1, and the subcarrier frequency domain spacing is $P*K_{min}$, and the number of subcarrier positions indicated by the second position set is 2P, and the subcarrier frequency domain spacing is $Q*K_{min}$.

The subcarrier position set can be expressed as:

$$\{q*P*K_{min}+k+K_0|q=1,2,…,Q\text{-}1\}\cup\{p*Q*K_{min}+k+K_0|p=0,1,2,…,2P\text{-}1\}$$

In some other embodiments, the transmitting end may obtain a first position set by successively taking integers from 0 to Q-1 for the variable q based on the calculation formula $q*P*K_{min}+k+K_0$, and obtain a second position set by successively taking integers from 0 to 2P-1 for the variable p based on the calculation formula $p*Q*K_{min}+k+K_0$.

In this case, the number of subcarrier positions indicated by the first position set is Q, and the subcarrier frequency domain spacing is $P*K_{min}$, and the number of subcarrier positions indicated by the second position set is 2P, and the subcarrier frequency domain spacing is $Q*K_{min}$.

The subcarrier position set can be expressed as:

$$\{q*P*K_{min}+k+K_0|q=0,1,2,…,Q\text{-}1\}\cup\{p*Q*K_{min}+k+K_0|p=0,1,2,…,2P\text{-}1\}$$

It can be understood that the subcarrier conflicts of different sensing links or communication networks can be avoided by flexibly setting the values of k and $K_0$.

In some embodiments of the present disclosure, the time domain position occupied by the sensing signal may be a first time domain position, and the first time domain position may be a time domain position specified by a protocol, or may be a time domain position pre-negotiated by the transmitting and the receiving end.

For example, the first time domain position may be the N-th symbol position of each slot, and N may be any non-negative integer, such as any non-negative integer between 0 and 13. N may be 5, or N may be 5 and 9.

For another example, the first time domain position may be the N-th symbol position of each even slot, for example, the N-th symbol position of the 0th slot.

For another example, the first time domain position may be the N-th symbol position of each odd slot, for example, the N-th symbol position of the 1st slot.

For another example, the first time domain position may be the N-th symbol position of a specific slot among multiple slots, and the specific slot may be a slot determined according to $S_{offset}$ among the multiple slots, for example, the N-th symbol position of the $S_{offset}$ slot among every $T_{slot}$ slots. When $T_{slot} = 3$ and $S_{offset} = 1$, the first slot position is the N-th symbol position of the 1st slot among every 3 slots.

For another example, the first time domain position may be the N-th symbol position of the M-th slot of each subframe, where M may be 0 or 1, and N may be any non-negative integer between 0 and 13.

For another example, the first time domain position may be the N-th symbol position of the M-th slot of the P-th subframe of each frame, where P may be any non-negative integer between 0 and 9, M may be 0 or 1, and N may be any non-negative integer between 0 and 13.

It should be noted that the first time domain position may be any time domain position specified by the protocol or negotiated in advance.

In some embodiments of the present disclosure, the first time domain position may be a time domain position determined according to a first parameter.

The first parameter may also include at least one of the following:

a time domain symbol number set L, where L is used to determine the time domain symbols in one slot, for example, L= {5,9} is used to indicate that the 5th symbol and the 9th symbol in one slot are used to carry the sensing signal;

a time domain period $T_{slot}$, which is a positive integer; where $T_{slot}$ can be used to determine the number of slots included in one period, and each time domain period $T_{slot}$ can have at least one slot for carrying the sensing signal;

a slot offset $S_{offset}$, which is a non-negative integer less than $T_{slot}$; where the slot offset is used to determine the position of the slot carrying the sensing signal in one time domain period, for example, if $T_{slot}$ is 2 and $S_{offset}$ is 0, it means that each time domain period includes 2 slots, which are numbered 0 and 1 respectively, and the 0th slot is used to carry the sensing signal, and the 1st slot does not carry the sensing signal;

a starting slot number $S_0$, which is a non-negative integer; where the starting slot number $S_0$ is used to determine the number of the starting slot for carrying the sensing signal, for example, if the starting slot number $S_0$ is 6, it means that the number of the starting slot for carrying the sensing signal is 6, and one slot contains 14 symbols, that is, the slot starting from the 84th symbol is used to carry the sensing signal;

a number of slots $S_{num}$, which is a positive integer and is used to indicate the number of repetitions of the time domain period, for example, if the number of slots $S_{num}$ is 3, it means that the total number of slots used to carry the sensing signal is 3.

In some embodiments, at least one of the above L, $T_{slot}$, $S_{offset}$, $S_0$ and $S_{num}$ may be used to determine the time domain position occupied by the sensing signal, and the time domain position information may be a symbol position.

In some embodiments of the present disclosure, the first parameter may include at least one of the following:

a rate match pattern type indication (pattenType), for example, the rate match pattern type indication may be a coprime integer type (Coprime);
a first frequency domain interval P;
a second frequency domain interval Q;
a minimum frequency domain interval $K_{min}$;
a frequency domain offset k;
a starting physical resource block (PRB) number $K_0$;
a time domain symbol number set L;
a time domain period $T_{slot}$;
a time slot offset $S_{offset}$;
a starting slot number So;
a number of slots $S_{num}$.

FIG. 2B is a schematic diagram of resource occupancy of a sensing signal according to an embodiment of the present disclosure. As shown in FIG. 2B, the horizontal axis represents the symbol number in the time domain, the vertical axis represents the subcarrier number in the frequency domain, and one rectangular grid represents one resource element (RE). The black-filled rectangular grid represents a resource element used to carry the sensing signal (that is, the first wireless resource occupied by the sensing signal), and the unfilled rectangular grid represents a resource element not used to carry the sensing signal (that is, the second wireless resource not occupied by the sensing signal).

It should be noted that the schematic diagram of resource occupation of the sensing signal shown in FIG. 2B may also be referred to as a schematic diagram of resource occupation of the sensing signal based on a coprime integer pattern. The sensing signal shown in FIG. 2B may be a resource occupied by the sensing signal determined based on a first parameter, and the first parameter may be:

a rate match pattern type indication (pattenType) being a coprime integer type (Coprime);
the first frequency domain interval P being 2;
the second frequency domain interval Q being 5;
the minimum subcarrier spacing $K_{min}$ being 2;
the subcarrier offset k being 1;
the starting physical resource block (PRB) number $K_0$ being 2;
the time domain symbol number set L being {5,9};
the time domain period $T_{slot}$ being 2;
the slot offset $S_{offset}$ being 0;
the starting slot number $S_0$ being 6;
the number of slots $S_{num}$ being 3.

In step S2103: the transmitting end sends the first parameter to the receiving end.

In some embodiments, the receiving end may receive the first parameter. For example, the receiving end may receive the first parameter sent by the transmitting end. For another example, the receiving end may also receive the first parameter sent by other entities.

In some embodiments, the transmitting end may send a first message, and the first message may include the above first parameter. For example, the transmitting end may send the first message to the receiving end. Optionally, the receiving end may receive the first message.

In one implementation, the transmitting end is a network device, the receiving end is a terminal device, and the first message may be a radio resource control (RRC) message. For example, in the case that the transmitting end is a network device and the receiving end is a terminal device, the first message may be an RRC message.

In another implementation, both the transmitting end and the receiving end are terminal devices, and the first message may be a sidelink RRC message, and the sidelink RRC may be an RRC message of the PC5 interface. For example, in the case that both the transmitting end and the receiving end are terminal devices, the first message may be an RRC message.

In other embodiments, the transmitting end may send a second message, which may include one or more second parameters; the transmitting end may also send indication information, which may be used to instruct the receiving end to determine the first parameter from the one or more second parameters.

Similarly, the receiving end may receive the second message and obtain one or more second parameters. The receiving end may also receive indication information and determine the first parameter from the one or more second parameters according to the indication information.

In some embodiments, the one or more second parameters may include the first parameter.

In some embodiments, the name of the second parameter is not limited, and may be, for example, "rate match pattern", "rate match mode", "rate match parameter", "RateMatchPattern", "rate match pattern based on coprime integers", "RateMatchPattern-Coprime", "sensing reference signal pattern", "sensing signal resource determination parameter", etc.

For example, the above-mentioned one second parameter may be a Rate Match Pattern (RMP), and the above-mentioned one or more second parameters may constitute an RMP set. One or more RMPs may be determined as the first parameter from the RMP set through the indication information.

For another example, the transmitting end may carry multiple second parameters (such as RMP1, RMP2, RMP3, etc.) through a second message (such as an RRC message or a Sidelink RRC message), and may indicate the number of the second parameter (such as 1, 2 or 3) through indication information (such as DCI), and use the second parameter corresponding to the number as the first parameter.

In one implementation, the transmitting end is a network device, the receiving end is a terminal device, and the second message may be an RRC message. For example, in the case that the transmitting end is a network device and the receiving end is a terminal device, the second message may be an RRC message.

Optionally, the above indication information may be downlink control information (DCI).

In another implementation, both the transmitting end and the receiving end are terminal devices, and the second message may be a sidelink RRC message, and the sidelink RRC may be an RRC message of the PC5 interface. For example, in the case that both the transmitting end and the receiving end are terminal devices, the second message may be an RRC message.

Optionally, the above indication information may be sidelink control information (SCI).

In step S2104: the receiving end determines the first wireless resource occupied by the sensing signal.

In some embodiments, the receiving end may determine the first wireless resource occupied by the sensing signal based on the above-mentioned first parameter.

It should be noted that the specific manner in which the receiving end determines the first wireless resource occupied by the sensing signal according to the first parameter can refer to the description of the transmitting end determining the first wireless resource occupied by the sensing signal according to the first parameter in step S2102, which will not be repeated here.

In step S2105: the transmitting end sends a communication signal via a second wireless resource, where the second wireless resource does not include the first wireless resource.

In some embodiments, the receiving end may receive the communication signal via the second wireless resource.

Similarly, the second wireless resource may include at least one RE, at least one REG, at least one RB, or at least one RBG.

In some embodiments, the first wireless resource and the second wireless resource may both be at least one resource element (RE). The first wireless resource and the second wireless resource are different.

In some embodiments, the transmitting end may map a communication signal (e.g., data payload, wireless communication reference signal, etc.) onto the second wireless resource and send the communication signal.

For example, the transmitting end may map the communication signal to a resource element not occupied by the sensing signal and send the communication signal.

In some embodiments, the receiving end may determine the first wireless resource occupied by the sensing signal according to the first parameter, for example, may determine the coordinate position of the first wireless resource on the time-frequency two-dimensional resource grid.

The receiving end may perform rate matching when receiving the communication signal. For example, the first wireless resource may be skipped and the communication signal may not be received. For another example, the communication signal may be received through a second wireless resource other than the first wireless resource.

The method involved in the embodiments of the present disclosure may include at least one of the above steps S2101 to S2105. For example, step S2102 may be implemented as an independent embodiment, step S2104 may be implemented as an independent embodiment, step S2105 may be implemented as an independent embodiment, steps S2102+S2105 may be implemented as an independent embodiment, steps S2103+S2104 may be implemented as an independent embodiment, steps S2102+S2103+S2105 may be implemented as an independent embodiment, and steps S2103+S2104+S2105 may be implemented as an independent embodiment, but is not limited thereto.

In some embodiments, the above steps S2101 to S2105 can be executed in a swapped order or simultaneously. For example, steps S2102 and S2103 can be executed in a swapped order or simultaneously, and steps S2102 and S2104 can be executed in a swapped order or simultaneously.

In some embodiments, the above steps S2101 to S2105 are all optional steps. For example, steps S2101, S2103, and S2104 are optional, and one or more of these steps may be omitted or replaced in different embodiments. For another example, steps S2101, S2102, and S2103 are optional, and one or more of these steps may be omitted or replaced in different embodiments.

In some embodiments, reference may be made to other optional implementations described before or after the specification corresponding to FIG. 2A.

By adopting the above method, in the Integrated Sensing And Communication (ISAC) scenario, rate matching can be performed according to the first wireless resource occupied by the sensing signal to avoid the sensing signal affecting the transmission of the communication signal, thereby improving the transmission reliability of the communication signal in the Integrated Sensing And Communication scenario.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" can be used interchangeably.

In some embodiments, terms such as "up", "uplink", "physical uplink" can be interchangeable, and terms such as "down", "downlink", "physical downlink" can be interchangeable, and terms such as "side", "sidelink", "side communication", "sidelink communication", "direct connection", "direct link", "direct communication", "direct link communication" can be interchangeable.

In some embodiments, the terms such as "downlink control information (DCI)", "downlink (DL) assignment", "DL DCI", "uplink (UL) grant", "UL DCI" can be used interchangeably.

In some embodiments, the terms such as "physical downlink shared channel (PDSCH)", "DL data" and the like can be interchangeable with each other, and the terms "physical uplink shared channel (PUSCH)", "UL data" can be interchangeable with each other.

In some embodiments, terms such as "moment", "time point", "time", and "time position" can be interchangeable, and terms such as "duration", "time period", "time window", "window", and "time" can be interchangeable.

In some embodiments, the terms such as "resource block (RB)", "physical resource block (PRB)", "sub-carrier group (SCG)", "resource element group (REG)", "PRB pair", "RB pair", "resource element (RE)", and "sub-carrier" can be used interchangeably.

In some embodiments, the terms such as "frame", "radio frame", "subframe", "slot", "sub-slot", "mini-slot", "symbol", "code element", "transmission time interval (TTI)" can be used interchangeably.

In some embodiments, "acquire", "obtain", "get", "receive", "transmit", "bidirectional transmission", "send and/or receive" can be interchangeable, and can be interpreted as receiving from other entities, acquiring from protocols, obtaining from high layers, obtaining by self-processing, autonomous implementation, etc.

In some embodiments, terms such as "send", "emit", "report", "deliver", "transmit", "bidirectional transmission", "send and/or receive" can be used interchangeably.

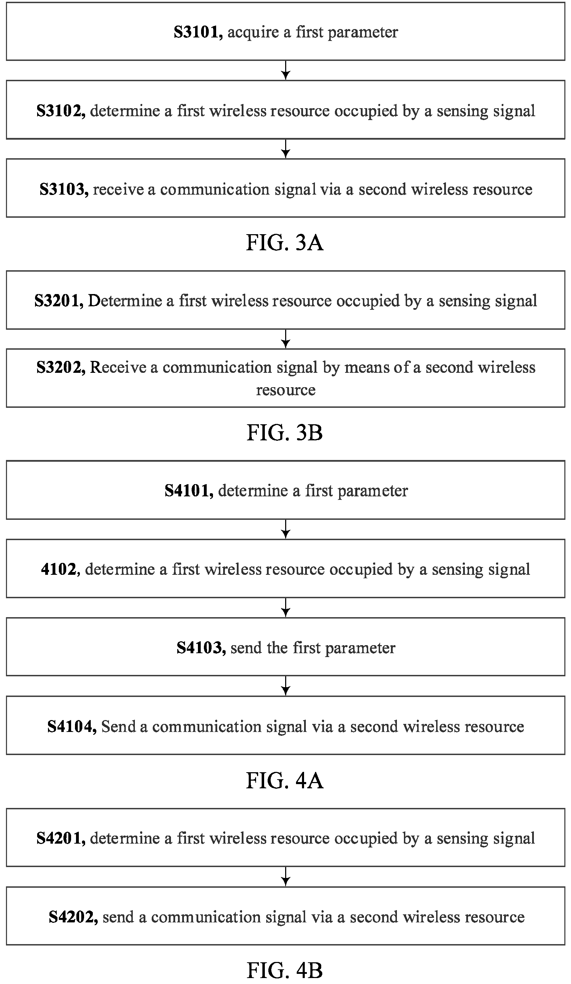

FIG. 3A is a flowchart of a signal transmission method according to an embodiment of the present disclosure. As shown in FIG. 3A, an embodiment of the present disclosure relates to a signal transmission method, which can be performed by a receiving end. The method may include the following steps.

In step S3101, a first parameter is acquired.

The optional implementation of step S3101 can refer to the optional implementation of step S2103 in FIG. 2A and other related parts in the embodiment involved in FIG. 2A, which will not be described in detail here.

In some embodiments, the receiving end may receive the first parameter sent by the transmitting end, but is not limited thereto, and the receiving end may also receive the first parameter sent by other entities.

In some embodiments, the receiving end may acquire a first parameter specified by the protocol.

In some embodiments, the receiving end can acquire the first parameter from the upper layer(s).

In some embodiments, the receiving end may perform processing to obtain the first parameter.

In some embodiments, step S3101 may be omitted, and the receiving end may autonomously implement the function indicated by the first parameter, or the above function is default or acquiescent.

In step S3102: a first wireless resource occupied by a sensing signal is determined.

The optional implementation of step S3102 can refer to the optional implementation of step S2104 in FIG. 2A and other related parts in the embodiment involved in FIG. 2A, which will not be described in detail here.

In step S3103: a communication signal is received via a second wireless resource.

The optional implementation of step S3103 can refer to the optional implementation of step S2105 in FIG. 2A and other related parts in the embodiment involved in FIG. 2A, which will not be described in detail here.

In some embodiments, the receiving end may receive a communication signal sent by the transmitting end, but is not limited thereto, and the receiving end may also receive a communication signal sent by other entities.

In some embodiments, the receiving end may perform processing to obtain a communication signal.

The method involved in the embodiment of the present disclosure may include at least one of the above steps S3101 to S3103. For example, step S3103 may be implemented as an independent embodiment, steps S3102+S3103 may be implemented as an independent embodiment, and steps S3101+S3102 may be implemented as an independent embodiment, but it is not limited thereto.

In some embodiments, the above steps S3101 to S3103 are all optional steps. For example, steps S3101 and S3102 are optional, and one or more of these steps may be omitted or replaced in different embodiments.

FIG. 3B is a flowchart of a signal transmission method according to an embodiment of the present disclosure. As shown in FIG. 3B, an embodiment of the present disclosure relates to a signal transmission method, which can be performed by a receiving end. The method may include the following steps.

In step S3201: a first wireless resource occupied by a sensing signal is determined.

The optional implementation of step S3201 can refer to the optional implementation of step S2104 in FIG. 2A, step S3102 in FIG. 3A, and other related parts in the embodiments involved in FIG. 2A and FIG. 3A, which will not be described in detail here.

In some embodiments, the sensing signal may be a signal for sensing sent by the transmitting end.

In some embodiments, the first wireless resource occupied by the sensing signal may be determined according to the first parameter.

In some embodiments, the first parameter includes:

a first frequency domain interval P;
a second frequency domain interval Q, where P and Q are a pair of coprime positive integers, and P is smaller than Q;
a minimum frequency domain interval $K_{min}$, where $K_{min}$ is a positive integer.

In some embodiments, the first parameter further includes at least one of the following:

a subcarrier offset k, where k is a non-negative integer less than or equal to $K_{min}$;

a starting physical resource block (PRB) number $K_0$, where $K_0$ is a non-negative integer, $K_0$ is an offset of a starting PRB of the first wireless resource relative to an N-th common resource block (CRB), where N is a preset non-negative integer;

a time domain symbol number set L,

a time domain period $T_{slot}$, where $T_{slot}$ is a positive integer;

a slot offset $S_{offset}$, where $S_{offset}$ is a non-negative integer less than $T_{slot}$;

a starting slot number $S_0$, where $S_0$ is a non-negative integer;

a number of slots $S_{num}$, where $S_{num}$ is a positive integer.

In step S3202: a communication signal is received via a second wireless resource.

The second wireless resource may not include the first wireless resource.

The optional implementation of step S3202 can refer to the optional implementation of step S2105 in FIG. 2A, step S3103 in FIG. 3A, and other related parts in the embodiments involved in FIG. 2A and FIG. 3A, which will not be described in detail here.

In some embodiments, the above steps are all optional steps.

In some embodiments, the embodiment shown in FIG. 3B may also be combined with step S3101 in the embodiment shown in FIG. 3A as a new embodiment.

In some embodiments, acquiring the first parameter includes:

receiving a first message sent by the transmitting end, where the first message includes the first parameter.

In the above embodiment, the first parameter can be acquired through the first message, so that the transmitting end and the receiving end use the same first parameter, thereby improving the reliability and flexibility of signal transmission.

In some embodiments, the transmitting end is a network device, the receiving end is a terminal device, and the first message is a radio resource control (RRC) message.

In some other embodiments, the transmitting end and the receiving end are both terminal devices, and the first message is a sidelink RRC message.

In the above embodiment, the first parameter can be acquired through the first message in different scenarios, thereby increasing the application scenarios of the technical solution.

In some embodiments, acquiring the first parameter includes:

receiving a second message sent by the transmitting end, where the second message includes one or more second parameters;

receiving indication information sent by the transmitting end, where the indication information is used to instruct the receiving end to determine the first parameter from the one or more second parameters;

determining the first parameter from the one or more second parameters according to the indication information.

In some embodiments, the transmitting end is a network device, the receiving end is a terminal device, and the second message is an RRC message.

In some other embodiments, the transmitting end and the receiving end are both terminal devices, and the second message is a sidelink RRC message.

FIG. 4A is a flowchart of a signal transmission method according to an embodiment of the present disclosure. As shown in FIG. 4A, the embodiment of the present disclosure relates to a signal transmission method, which can be executed by a transmitting end, and the method includes the following steps.

In step S4101, a first parameter is determined.

The optional implementation of step S4101 can refer to the optional implementation of step S2101 in FIG. 2A and other related parts in the embodiment involved in FIG. 2A, which will not be described in detail here.

In step S4102: a first wireless resource occupied by a sensing signal is determined.

The optional implementation of step S4102 can refer to the optional implementation of step S2102 in FIG. 2A and other related parts in the embodiment involved in FIG. 2A, which will not be described in detail here.

In some embodiments, the transmitting end may determine the first wireless resource occupied by the sensing signal according to the above-mentioned first parameter.

Optionally, the receiving end may also determine the first wireless resource occupied by the sensing signal according to the first parameter.

In step S4103: the first parameter is sent.

The optional implementation of step S4103 can refer to the optional implementation of step S2103 in FIG. 2A and other related parts in the embodiment involved in FIG. 2A, which will not be described in detail here.

In some embodiments, the transmitting end may send the first parameter to the receiving end, but is not limited thereto, and the transmitting end may also send the first parameter to other entities.

In step S4104: a communication signal is sent via a second wireless resource.

The optional implementation of step S4104 can refer to the optional implementation of step S2105 in FIG. 2A and other related parts in the embodiment involved in FIG. 2A, which will not be described in detail here.

In some embodiments, the transmitting end may send the communication signal to the receiving end, but is not limited thereto, and the transmitting end may also send the communication signal to other entities.

The method involved in the embodiment of the present disclosure may include at least one of the above steps S4101 to S4104. For example, step S4104 may be implemented as an independent embodiment, steps S4102+S4104 may be implemented as an independent embodiment, steps S4101+S4103 may be implemented as an independent embodiment, and steps S4102+S4103+S4104 may be implemented as an independent embodiment, but are not limited thereto.

In some embodiments, the above steps S4101 to S4104 can be executed in a swapped order or simultaneously. For example, steps S4102 and S4103 can be executed in a swapped order or simultaneously.

In some embodiments, the above steps S4101 to S4104 are all optional steps. For example, steps S4101, S4102, and S4103 are optional, and one or more of these steps may be omitted or replaced in different embodiments. For another example, steps S4101 and S4103 are optional, and one or more of these steps may be omitted or replaced in different embodiments.

FIG. 4B is a flowchart of a signal transmission method according to an embodiment of the present disclosure. As shown in FIG. 4B, an embodiment of the present disclosure relates to a signal transmission method, which can be performed by a transmitting end. The method may include the following steps.

In step S4201: a first wireless resource occupied by a sensing signal is determined.

The optional implementation of step S4201 can refer to step S2102 in FIG. 2A, the optional implementation of step S4102 in FIG. 4A, and other related parts in the embodiments involved in FIG. 2A and FIG. 4A, which will not be described in detail here.

In some embodiments, the transmitting end determines the first wireless resource occupied by the sensing signal according to the first parameter.

In some embodiments, the first parameter includes:

a first frequency domain interval P;

a second frequency domain interval Q, where P and Q are a pair of coprime positive integers, and P is smaller than Q;

a minimum frequency domain interval $K_{min}$, where $K_{min}$ is a positive integer.

In some embodiments, the first parameter further includes at least one of the following:

a subcarrier offset k, where k is a non-negative integer less than or equal to $K_{min}$;

a starting physical resource block (PRB) number $K_0$, where $K_0$ is a non-negative integer, $K_0$ is an offset of a starting PRB of the first wireless resource relative to an N-th common resource block (CRB), where N is a preset non-negative integer;

a time domain symbol number set L,

a time domain period $T_{slot}$, where $T_{slot}$ is a positive integer;

a slot offset $S_{offset}$, where $S_{offset}$ is a non-negative integer less than $T_{slot}$;

a starting slot number $S_0$, where $S_0$ is a non-negative integer;

a number of slots $S_{num}$, where $S_{num}$ is a positive integer.

In step S4202: a communication signal is sent via a second wireless resource.

The optional implementation of step S4202 can refer to the optional implementation of step S2105 in FIG. 2A, step S4104 in FIG. 4A, and other related parts in the embodiments involved in FIG. 2A and FIG. 4A, which will not be described in detail here.

In some embodiments, the above steps are all optional steps.

In some embodiments, the embodiment shown in FIG. 4B may also be combined with step S4101 or step S4103 in the embodiment shown in FIG. 4A as a new embodiment.

In some embodiments, the method further includes:

sending a first message to the receiving end, where the first message includes the first parameter.

In some embodiments, the transmitting end is a network device, the receiving end is a terminal device, and the first message is a radio resource control (RRC) message.

In some other embodiments, the transmitting end and the receiving end are both terminal devices, and the first message is a sidelink RRC message.

In some embodiments, the method further includes:

sending a second message to the receiving end, where the second message includes one or more second parameters;

sending indication information to the receiving end, where the indication information is used to instruct the receiving end to determine the first parameter from the one or more second parameters.

In some embodiments, the transmitting end is a network device, the receiving end is a terminal device, and the second message is an RRC message.

In some other embodiments, the transmitting end and the receiving end are both terminal devices, and the second message is a sidelink RRC message.

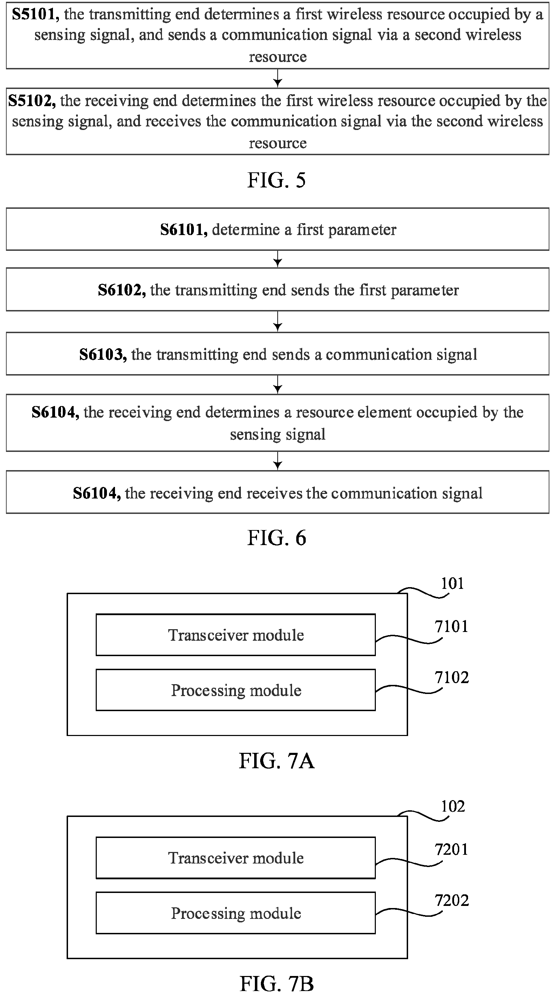

FIG. 5 is a flowchart of a signal transmission method according to an embodiment of the present disclosure. As shown in FIG. 5, an embodiment of the present disclosure relates to a signal transmission method, which may include the following steps.

In step S5101: the transmitting end determines a first wireless resource occupied by a sensing signal, and sends a communication signal via a second wireless resource.

The sensing signal is a signal sent by the transmitting end for sensing, and the second wireless resource does not include the first wireless resource.

The optional implementation of step S5101 can refer to the optional implementation of steps S2101 and S2105 in FIG. 2A, steps S4102 and S4104 in FIG. 4A, and other related parts in the embodiments involved in FIG. 2A and FIG. 4A, which will not be described in detail here.

In step S5102: the receiving end determines the first wireless resource occupied by the sensing signal, and receives the communication signal via the second wireless resource.

The optional implementation of step S5102 can refer to steps S2104 and S2105 of FIG. 2A, steps S3102 and S3103 of FIG. 3A, and other related parts of the embodiments involved in FIG. 2A and FIG. 3A, which will not be described in detail here.

In some embodiments, the above method may include the methods described in the above embodiments of the communication system, receiving end, transmitting end, etc., which will not be repeated here.

FIG. 6 is a flowchart of a signal transmission method according to an embodiment of the present disclosure. As shown in FIG. 6, an embodiment of the present disclosure relates to a signal transmission method, which can be executed by a communication system, and the method may include the following steps.

In step S6101, a first parameter is determined.

In some embodiments, in order to indicate that the resource element occupied by the sensing reference signal based on the coprime integer pattern is unavailable to the wireless communication system, a new rate match pattern or a new RRC information element is defined based on the first parameter. For example, a new pattern Type is defined in the RateMatchPattern of the 3GPP protocol, or a new RRC information element RateMatchPattern-Coprime is defined in the 3GPP protocol.

The first parameter may include at least one of the following parameters:

a rate match pattern type indication (pattenType), for example, the rate match pattern type indication may be a coprime integer type (Coprime);

a first frequency domain interval P;

a second frequency domain interval Q;

a minimum frequency domain interval $K_{min}$;

a frequency domain offset k;

a starting physical resource block (PRB) number $K_0$;

a time domain symbol number set L;

a time domain period $T_{slot}$;

a time slot offset $S_{offset}$;

a starting slot number So;

a number of slots $S_{num}$.

In step S6102: the transmitting end sends the first parameter.

The transmitting end (e.g., a wireless transmitter) generates a rate match pattern (e.g., a first parameter) according to the sensing reference signal pattern, and notifies the receiving end (e.g., a wireless communication receiver) of the rate match pattern through signaling.

In some embodiments, if the transmitting end is a network device (e.g., a base station) and the receiving end is a terminal device, the above signaling is RRC signaling.

Optionally, the transmitting end or the wireless communication network may configure multiple RMPs through RRC signaling to form one RMP set. Then the transmitter may dynamically select one subset (including one or more RMPs) from the RMP set through DCI signaling and indicate it to the receiving end.

In some other embodiments, if both the transmitting end and the receiving end are terminal devices, the RMP may be indicated by RRC signaling of the PC5 interface.

In step S6103: the transmitting end sends a communication signal.

For example, the transmitting end maps the communication signal (including data payload and wireless communication reference signal, etc.) to resource elements other than the sensing reference signal (indicated by the rate match pattern described in 1) and sends it.

In step S6104: the receiving end determines a resource element occupied by the sensing signal.

For example, the receiving end may receive the rate match pattern (e.g., the first parameter) and determine the coordinate position of the resource element occupied by the sensing reference signal on the time-frequency two-dimensional resource grid according to the rate match pattern.

In step S6104: the receiving end receives the communication signal.

For example, when receiving wireless communication data, the receiving end performs rate matching on the resource elements described in 4, that is, skips the resource elements occupied by the sensing reference signal and does not receive the wireless communication signal.

In some embodiments, in an Integrated Sensing And Communication system, the sensing reference signal adopts a pattern based on coprime integers, as shown in FIG. 2B. The transmitting end generates a rate match pattern as follows and notifies the receiving end (e.g., a wireless communication receiver) through RRC signaling. When the transmitting end performs resource mapping, rate matching is performed according to the rate match pattern. Accordingly, the receiver receives the rate match pattern and determines the coordinate position of the resource element occupied by the sensing reference signal on the time-frequency two-dimensional resource grid based on the rate match pattern, and skips the resource element when receiving communication data, that is, does not detect the received signal on the resource element.

In some embodiments of the present disclosure, a communication system is provided, which may include a receiving end and a transmitting end, where the receiving end can execute the signal transmission method performed by the receiving end in the aforementioned embodiments of the present disclosure; and the transmitting end can execute the signal transmission method performed by the transmitting end in the aforementioned embodiments of the present disclosure.

The embodiments of the present disclosure also propose an apparatus for implementing any of the above methods, for example, an apparatus is proposed, the above apparatus includes a unit or module for implementing each step performed by the receiving end in any of the above methods. For another example, another apparatus is also proposed, including a unit or module for implementing each step performed by the transmitting end in any of the above methods.

It should be understood that the division of the units or modules in the above apparatus is only a division of logical functions, which can be fully or partially integrated into one physical entity or physically separated in actual implementation. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus, where the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and the functions of some or all of the units or modules may be implemented by designing the hardware circuits. The hardware circuits may be understood as one or more processors. For example, in one implementation, the hardware circuits are application-specific integrated circuits (ASICs), and the functions of some or all of the above units or modules may be implemented by designing the logical relationship of the components in the circuits. For another example, in another implementation, the hardware circuits may be implemented by programmable logic devices (PLDs). For example, field programmable gate arrays (FPGAs) may include a large number of logic gate circuits, and the connection relationship between the logic gate circuits may be configured by configuring the configuration files, thereby implementing the functions of some or all of the above units or modules. All units or modules of the above apparatus may be implemented in the form of software called by the processor, or in the form of hardware circuits, or in the form of software called by the processor, and the remaining part may be implemented in the form of hardware circuits.

In the embodiments of the present disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP); in another implementation, the processor may implement certain functions through the logical relationship of a hardware circuit, and the logical relationship of the above hardware circuit may be fixed or reconfigurable, such as a hardware circuit implemented by a processor such as an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it can also be a hardware circuit designed for artificial intelligence, which can be understood as ASIC, such as Neural Network Processing Unit (NPU), Tensor Processing Unit (TPU), Deep Learning Processing Unit (DPU), etc.

FIG. 7A is a schematic diagram of the structure of a receiving end proposed in an embodiment of the present disclosure. As shown in FIG. 7A, the receiving end 101 may include: at least one of a transceiver module 7101, a processing module 7102, etc. In some embodiments, the transceiver module 7101 is configured to receive a communication signal through a second wireless resource, and the second wireless resource does not include the first wireless resource; the processing module 7102 is configured to determine the first wireless resource occupied by a sensing signal, and the sensing signal is a signal sent by the transmitting end for sensing. Optionally, the transceiver module 7101 can be used to perform at least one of the communication steps such as sending and/or receiving performed by the receiving end 101 in any of the above methods (for example, step S2103, step S2105, but not limited thereto), which will not be repeated here. Optionally, the processing module 7102 can be used to perform at least one of the other steps (for example, step S2101, step S2102, step S2104, but not limited thereto) performed by the receiving end 101 in any of the above methods, which will not be repeated here.

FIG. 7B is a schematic diagram of the structure of a transmitting end proposed in an embodiment of the present disclosure. As shown in FIG. 7B, the transmitting end 102 may include: at least one of a transceiver module 7201, a processing module 7202, etc. In some embodiments, the transceiver module 7201 is configured to send a communication signal through a second wireless resource, and the second wireless resource does not include the first wireless resource; the processing module 7202 is configured to determine the first wireless resource occupied by a sensing signal, and the sensing signal is a signal sent by the transmitter for sensing. Optionally, the transceiver module 7201 can be used to perform at least one of the communication steps such as sending and/or receiving (for example, step S2103, step S2105, but not limited thereto) performed by the transmitting end 102 in any of the above methods, which will not be repeated here. Optionally, the processing module 7202 can be used to perform at least one of the other steps (for example, step S2101, step S2102, step S2104, but not limited thereto) performed by the transmitting end 102 in any of the above methods, which will not be repeated here.

In some embodiments, the transceiver module may include a sending module and/or a receiving module, and the sending module and the receiving module may be separate or integrated. Optionally, the transceiver module may be interchangeable with the transceiver.

In some embodiments, the processing module can be one module or include multiple submodules. Optionally, the multiple submodules respectively execute all or part of the steps required to be executed by the processing module. Optionally, the processing module can be replaced with the processor.

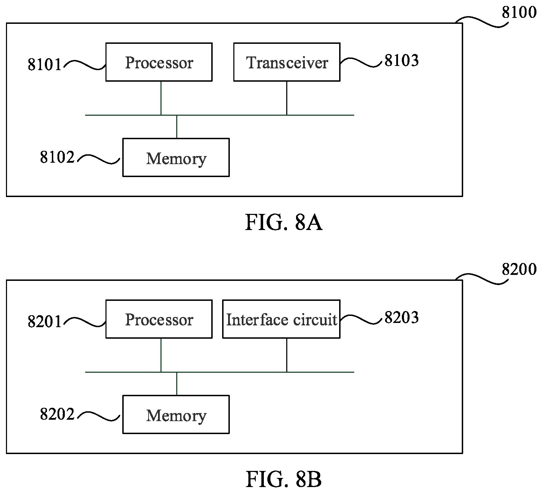

FIG. 8A is a schematic diagram of the structure of a communication device 8100 proposed in an embodiment of the present disclosure. The communication device 8100 may be a transmitting end (e.g., an access network device, a core network device, etc.), or a receiving end (e.g., a user device, etc.), or a chip, a chip system, or a processor that supports the transmitting end to implement any of the above methods, or a chip, a chip system, or a processor that supports the receiving end to implement any of the above methods. The communication device 8100 may be used to implement the method described in the above method embodiments, and the details may refer to the description in the above method embodiments.

As shown in FIG. 8A, the communication device 8100 includes one or more processors 8101. The processor 8101 may be a general-purpose processor or a dedicated processor, for example, a baseband processor or a central processing unit. The baseband processor may be used to process the communication protocol and the communication data, and the central processing unit may be used to control the communication device (such as a base station, a baseband chip, a receiving end, a receiving end chip, a DU or a CU, etc.), execute a program, and process the data of the program. The communication device 8100 is used to execute any of the above methods.

In some embodiments, the communication device 8100 further includes one or more memories 8102 for storing instructions. Optionally, all or part of the memory 8102 may also be outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the above method (for example, step S2103, step S2105, but not limited thereto), and the processor 8101 performs at least one of the other steps (for example, step S2101, step S2102, step S2104, but not limited thereto).

In some embodiments, the transceiver may include a receiver and/or a transmitter, and the receiver and the transmitter may be separate or integrated. Optionally, the terms such as transceiver, transceiver unit, transceiver machine, transceiver circuit, etc. may be replaced with each other, the terms such as transmitter, transmission unit, transmitter machine, transmission circuit, etc. may be replaced with each other, and the terms such as receiver, receiving unit, receiver machine, receiving circuit, etc. may be replaced with each other.

In some embodiments, the communication device 8100 may include one or more interface circuits. Optionally, the interface circuit is connected to the memory 8102, and the interface circuit can be used to receive signals from the memory 8102 or other apparatuses, and can be used to send signals to the memory 8102 or other apparatuses. For example, the interface circuit can read the instructions stored in the memory 8102 and send the instructions to the processor 8101.

The communication device 8100 described in the above embodiments may be a transmitting end or a receiving end, but the scope of the communication device 8100 described in the present disclosure is not limited thereto, and the structure of the communication device 8100 may not be limited by FIG. 8A. The communication device may be an independent device or may be part of a large device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a receiving end, an intelligent receiving end, a cellular phone, a wireless device, a handheld device, a mobile unit, a vehicle-mounted device, a transmitting end, a cloud device, an artificial intelligence device, etc.; (6) others, etc.

FIG. 8B is a schematic diagram of the structure of a chip 8200 provided in an embodiment of the present disclosure. In the case where the communication device 8100 may be a chip or a chip system, reference may be made to the schematic diagram of the structure of the chip 8200 shown in FIG. 8B, but the present disclosure is not limited thereto.

The chip 8200 includes one or more processors 8201, and the chip 8200 is used to execute any of the above methods.

In some embodiments, the chip 8200 further includes one or more interface circuits 8203. Optionally, the interface circuit 8203 is connected to the memory 8202, and the interface circuit 8203 can be used to receive signals from the memory 8202 or other apparatuses, and the interface circuit 8203 can be used to send signals to the memory 8202 or other apparatuses. For example, the interface circuit 8203 can read instructions stored in the memory 8202 and send the instructions to the processor 8201.

In some embodiments, the interface circuit 8203 executes at least one of the communication steps such as sending and/or receiving in the above methods (for example, step S2103, step S2105, but not limited thereto), and the processor 8201 executes at least one of the other steps (for example, step S2101, step S2102, step S2104, but not limited thereto).

In some embodiments, terms such as interface circuit, interface, transceiver pin, and transceiver may be used interchangeably.

In some embodiments, the chip 8200 further includes one or more memories 8202 for storing instructions. Alternatively, all or part of the memory 8202 may be outside the chip 8200.

The embodiment of the present disclosure also proposes a storage medium, on which instructions are stored, and when the instructions are executed on the communication device 8100, the communication device 8100 executes any of the above methods. Optionally, the storage medium is an electronic storage medium. Optionally, the storage medium is a computer-readable storage medium, but is not limited to this, and it can also be a storage medium readable by other apparatuses. Optionally, the storage medium can be a non-transitory storage medium, but is not limited to this, and it can also be a temporary storage medium.

The embodiment of the present disclosure also provides a program product, and when the program product is executed by the communication device 8100, the communication device 8100 executes any of the above methods. Optionally, the program product may be a computer program product.

The embodiment of the present disclosure also provides a computer program, which, when executed on a computer, enables the computer to execute any of the above methods.

**Claims**

1. A signal transmission method, wherein the method comprises:

   determining, by a receiving end, a first wireless resource occupied by a sensing signal, wherein the sensing signal is a signal sent by a transmitting end for sensing; and
   receiving a communication signal via a second wireless resource, wherein the second wireless resource does not comprise the first wireless resource.

2. The method according to claim 1, wherein the method further comprises:

   acquiring a first parameter;
   determining, by the receiving end, the first wireless resource occupied by the sensing signal comprises:
   determining, by the receiving end, the first wireless resource occupied by the sensing signal according to the first

24 a2122346 2

**EP 4 750 199 A1**

parameter.

3. The method according to claim 2, wherein acquiring the first parameter comprises:
receiving a first message sent by the transmitting end, wherein the first message comprises the first parameter.

4. The method according to claim 3, wherein

the transmitting end is a network device, the receiving end is a terminal device, and the first message is a wireless resource control (RRC) message; or
the transmitting end and the receiving end are both terminal devices, and the first message is a sidelink RRC message.

5. The method according to claim 2, wherein acquiring the first parameter comprises:

receiving a second message sent by the transmitting end, wherein the second message comprises one or more second parameters;
receiving indication information sent by the transmitting end, wherein the indication information is used to instruct the receiving end to determine the first parameter from the one or more second parameters; and
determining the first parameter from the one or more second parameters according to the indication information.

6. The method according to claim 5, wherein

the transmitting end is a network device, the receiving end is a terminal device, and the second message is an RRC message; or
the transmitting end and the receiving end are both terminal devices, and the second message is a sidelink RRC message.

7. The method according to any one of claims 2 to 6, wherein the first parameter comprises:

a first frequency domain interval P;
a second frequency domain interval Q, wherein P and Q are a pair of coprime positive integers, and P is smaller than Q; and
a minimum frequency domain interval $K_{min}$, wherein $K_{min}$ is a positive integer.

8. The method according to claim 7, wherein the first parameter further comprises at least one of:

a subcarrier offset k, wherein k is a non-negative integer less than or equal to $K_{min}$;
a starting physical resource block (PRB) number $K_0$, wherein $K_0$ is a non-negative integer, and $K_0$ is an offset of a starting PRB of the first wireless resource relative to an N-th common resource block (CRB), wherein N is a preset non-negative integer;
a time domain symbol number set L;
a time domain period $T_{slot}$, wherein $T_{slot}$ is a positive integer;
a slot offset $S_{offset}$, wherein $S_{offset}$ is a non-negative integer less than $T_{slot}$;
a starting slot number $S_0$, wherein $S_0$ is a non-negative integer; and
a slot number $S_{num}$, wherein $S_{num}$ is a positive integer.

9. A signal transmission method, wherein the method comprises:

determining, by a transmitting end, a first wireless resource occupied by a sensing signal, wherein the sensing signal is a signal sent by the transmitting end for sensing; and
sending a communication signal via a second wireless resource, wherein the second wireless resource does not comprise the first wireless resource.

10. The method according to claim 9, wherein determining, by the transmitting end, the first wireless resource occupied by the sensing signal comprises:
determining, by the transmitting end, the first wireless resource occupied by the sensing signal according to a first parameter.

24

11. The method according to claim 10, wherein the method further comprises:
sending a first message to a receiving end, wherein the first message comprises the first parameter.

12. The method according to claim 11, wherein

the transmitting end is a network device, the receiving end is a terminal device, and the first message is a wireless resource control (RRC) message; or
the transmitting end and the receiving end are both terminal devices, and the first message is a sidelink RRC message.

13. The method according to claim 10, wherein the method further comprises:

sending a second message to a receiving end, wherein the second message comprises one or more second parameters; and
sending indication information to the receiving end, wherein the indication information is used to instruct the receiving end to determine the first parameter from the one or more second parameters.

14. The method according to claim 13, wherein

the transmitting end is a network device, the receiving end is a terminal device, and the second message is an RRC message; or
the transmitting end and the receiving end are both terminal devices, and the second message is a sidelink RRC message.

15. The method according to any one of claims 10 to 14, wherein the first parameter comprises:

a first frequency domain interval P;
a second frequency domain interval Q, wherein P and Q are a pair of coprime positive integers, and P is smaller than Q; and
a minimum frequency domain interval $K_{min}$, wherein $K_{min}$ is a positive integer.

16. The method according to claim 15, wherein the first parameter further comprises at least one of:

a subcarrier offset k, wherein k is a non-negative integer less than or equal to $K_{min}$;
a starting physical resource block (PRB) number $K_0$, wherein $K_0$ is a non-negative integer, and $K_0$ is an offset of a starting PRB of the first wireless resource relative to an N-th common resource block (CRB), wherein N is a preset non-negative integer;
a time domain symbol number set L;
a time domain period $T_{slot}$, wherein $T_{slot}$ is a positive integer;
a slot offset $S_{offset}$, wherein $S_{offset}$ is a non-negative integer less than $T_{slot}$;
a starting slot number $S_0$, wherein $S_0$ is a non-negative integer; and
a slot number $S_{num}$, wherein $S_{num}$ is a positive integer.

17. A signal transmission method, wherein the method comprises:

a transmitting end determining a first wireless resource occupied by a sensing signal, and sending a communication signal via a second wireless resource; wherein the sensing signal is a signal sent by the transmitting end for sensing, and the second wireless resource does not comprise the first wireless resource; and
a receiving end determining the first wireless resource occupied by the sensing signal, and receiving the communication signal via the second wireless resource.

18. A receiving end, comprising:

a processing module, configured to determine a first wireless resource occupied by a sensing signal, wherein the sensing signal is a signal sent by a transmitting end for sensing; and
a transceiver module, configured to receive a communication signal via a second wireless resource, wherein the second wireless resource does not comprise the first wireless resource.

19. A transmitting end, comprising:

a processing module, configured to determine a first wireless resource occupied by a sensing signal, wherein the sensing signal is a signal sent by the transmitting end for sensing; and
a transceiver module, configured to send a communication signal via a second wireless resource, wherein the second wireless resource does not comprise the first wireless resource.

20. A receiving end, comprising:

one or more processors;
wherein the receiving end is configured to execute the signal transmission method according to any one of claims 1 to 8.

21. A transmitting end, comprising:

one or more processors;
wherein the transmitting end is configured to execute the signal transmission method according to any one of claims 9 to 16.

22. A communication system, wherein the communication system comprises a receiving end and a transmitting end, wherein the receiving end is configured to implement the signal transmission method according to any one of claims 1 to 8, and the transmitting end is configured to implement the signal transmission method according to any one of claims 9 to 16.

23. A storage medium storing instructions, wherein when the instructions are executed on a communication device, the communication device executes the signal transmission method according to any one of claims 1 to 8 or claims 9 to 16.

Communication system 100

| Receiving end 101 | Transmitting end 102 |

FIG. 1

Receiving end 101

Transmitting end 102

**S2101**, determine a first parameter

**S2102**, determine a first wireless resource occupied by a sensing signal

**S2103**, send the first parameter

**S2104**, determine the first wireless resource occupied by the sensing signal

**S2105**, send a communication signal via a second wireless resource, where the second wireless resource does not include the first wireless resource

FIG. 2A

FIG. 2B

S3101, acquire a first parameter

S3102, determine a first wireless resource occupied by a sensing signal

S3103, receive a communication signal via a second wireless resource

FIG. 3A

S3201, Determine a first wireless resource occupied by a sensing signal

S3202, Receive a communication signal by means of a second wireless resource

FIG. 3B

S4101, determine a first parameter

4102, determine a first wireless resource occupied by a sensing signal

S4103, send the first parameter

S4104, Send a communication signal via a second wireless resource

FIG. 4A

S4201, determine a first wireless resource occupied by a sensing signal

S4202, send a communication signal via a second wireless resource

FIG. 4B

S5101, the transmitting end determines a first wireless resource occupied by a sensing signal, and sends a communication signal via a second wireless resource

S5102, the receiving end determines the first wireless resource occupied by the sensing signal, and receives the communication signal via the second wireless resource

FIG. 5

S6101, determine a first parameter

S6102, the transmitting end sends the first parameter

S6103, the transmitting end sends a communication signal

S6104, the receiving end determines a resource element occupied by the sensing signal

S6104, the receiving end receives the communication signal

FIG. 6

101

Transceiver module — 7101

Processing module — 7102

FIG. 7A

102

Transceiver module — 7201

Processing module — 7202

FIG. 7B

8100

8101 — Processor          Transceiver — 8103

8102 — Memory

FIG. 8A

8200

8201 — Processor          Interface circuit — 8203

8202 — Memory

FIG. 8B

## INTERNATIONAL SEARCH REPORT

| International application No. |
|---|
| **PCT/CN2023/108756** |

### A.    CLASSIFICATION OF SUBJECT MATTER

H04W 72/23(2023.01)i

According to International Patent Classification (IPC) or to both national classification and IPC

### B.    FIELDS SEARCHED

Minimum documentation searched (classification system followed by classification symbols)

IPC: H04W,H04Q,H04L

Documentation searched other than minimum documentation to the extent that such documents are included in the fields searched

Electronic data base consulted during the international search (name of data base and, where practicable, search terms used)

CNTXT, WPABS, ENTXTC, CNKI, 3GPP: 感知, 通信, 信号, 资源, 参数, 配置, 无线资源控制, 时域, 频域, 间隔, sense, communication, signal, resource, parameter, configure, radio, control, RRC, time, frequency, domain, interval

### C.    DOCUMENTS CONSIDERED TO BE RELEVANT

| Category* | Citation of document, with indication, where appropriate, of the relevant passages | Relevant to claim No. |
|---|---|---|
| X | CN 115665875 A (CHENGDU AIRUI WIRELESS TECHNOLOGY CO., LTD.) 31 January 2023 (2023-01-31)<br>    description, paragraphs 45-138 | 1-6, 9-14, 17-23 |
| X | CN 114727403 A (CHINA UNITED NETWORK COMMUNICATIONS GROUP CO., LTD.) 08 July 2022 (2022-07-08)<br>    description, paragraphs 36-198, and claims 1-22 | 1-6, 9-14, 17-23 |
| X | CN 114760701 A (CHINA UNITED NETWORK COMMUNICATIONS GROUP CO., LTD.) 15 July 2022 (2022-07-15)<br>    description, paragraphs 53-291 | 1-6, 9-14, 17-23 |
| X | CN 114786265 A (CHINA UNITED NETWORK COMMUNICATIONS GROUP CO., LTD.) 22 July 2022 (2022-07-22)<br>    description, paragraphs 28-176 | 1-6, 9-14, 17-23 |
| A | WO 2022194263 A1 (HUAWEI TECHNOLOGIES CO., LTD.) 22 September 2022 (2022-09-22)<br>    entire document | 1-23 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 December 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/108756** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2023115545 A1 (GUANGDONG OPPO MOBILE TELECOMMUNICATIONS CORP., LTD.) 29 June 2023 (2023-06-29)<br>entire document | 1-23 |

Form PCT/ISA/210 (second sheet) (July 2022)

## INTERNATIONAL SEARCH REPORT
### Information on patent family members

| International application No. |
| --- |
| **PCT/CN2023/108756** |

| Patent document cited in search report | | | Publication date (day/month/year) | Patent family member(s) | Publication date (day/month/year) |
| --- | --- | --- | --- | --- | --- |
| CN | 115665875 | A | 31 January 2023 | None | |
| CN | 114727403 | A | 08 July 2022 | None | |
| CN | 114760701 | A | 15 July 2022 | None | |
| CN | 114786265 | A | 22 July 2022 | None | |
| WO | 2022194263 | A1 | 22 September 2022 | None | |
| WO | 2023115545 | A1 | 29 June 2023 | None | |

Form PCT/ISA/210 (patent family annex) (July 2022)